# EUROPÄISCHE PATENTSCHRIFT

(11) **EP 3 280 927 B1**
(45) Veröffentlichungstag und Bekanntmachung des Hinweises auf die Patenterteilung: **16.12.2020**
(21) Anmeldenummer: 16714911.1
(22) Anmeldetag: 07.04.2016
(51) Int. Cl.: F16D 55/00, B60T 17/22

(54) **SCHEIBENBREMSE, INSBESONDERE FÜR EIN NUTZFAHRZEUG**
DISK BRAKE, IN PARTICULAR FOR A UTILITY VEHICLE
FREIN À DISQUE, EN PARTICULIER POUR UN VÉHICULE UTILITAIRE

(30) Priorität: 09.04.2015 DE 102015105350
(43) Veröffentlichungstag der Anmeldung: 14.02.2018
(73) Patentinhaber: KNORR-BREMSE Systeme für Nutzfahrzeuge GmbH, 80809 München (DE)
(72) Erfinder: MACK, Martin, 80809 München (DE); SIEBKE, Alf, 86938 Schondorf am Ammersee (DE); GRUBER, Markus, 85560 Ebersberg (DE)
(86) Internationale Anmeldenummer: PCT/EP2016/057605
(87) Internationale Veröffentlichungsnummer: WO 2016/162410

(56) Entgegenhaltungen:
- EP-A1- 2 634 446
- DE-A1-102011 000 425
- US-A1- 2007 107 994

## Beschreibung

Die Erfindung betrifft eine Scheibenbremse, insbesondere für ein Nutzfahrzeug nach dem Oberbegriff des Anspruchs 1.

Es ist bekannt, benutzte Scheibenbremsen, die im Rahmen von Wartungsarbeiten demontiert, d.h. vom Nutzfahrzeug abgebaut werden, nach einer Überprüfung der Funktionsteile und gegebenenfalls deren Ersatz bzw. Überarbeitung wiederzuverwenden, also in ein Nutzfahrzeug einzubauen.

Durch Wiederverwendung von gebrauchten Funktionsteilen der Scheibenbremse wird der enthaltene hohe Materialwert und Fertigungsaufwand weitgehend genutzt, woraus sich eine preisgünstige Alternative zu neu gefertigten Funktionsteilen ergibt.

Allerdings ist die Verwendung solcher gebrauchten Funktionsteile insoweit problematisch, als bislang nicht erkennbar ist, ob das jeweilige Funktionsteil in seinem weiteren Gebrauch den Betriebsbelastungen innerhalb einer vorgegebenen Standzeit ausreichend standhält. D.h., die Funktion und Zuverlässigkeit der aufgearbeiteten Scheibenbremse darf nicht von eventuellen Mängeln der wiederverwendeten Bauteile beeinträchtigt werden.

Tatsächlich kann bei einer Reihe von Funktionsteilen der Scheibenbremse nicht erkannt werden, welchen Beanspruchungen dieses Funktionsteil, beispielsweise der Bremssattel, bis zu einem Ausbau ausgesetzt war.

Überdies sind viele Funktionsteile nach Zeitfestigkeitskriterien ausgelegt, aus denen sich eine definiert begrenzte Lebensdauer ergibt.

Vor allem, wie erwähnt, aus Gründen der Wirtschaftlichkeit, aber auch der Ressourcenschonung besteht eine Forderung darin, ein Maximum an Funktionsteilen einer gebrauchten Bremse für ein aufgearbeitetes Produkt weiterzuverwenden. Dazu ist eine hohe Sicherheit der Bewertung der Bauteile erforderlich, nicht zuletzt aus Gründen der Gewährleistung bzw. Produkthaftung.

Aus anderen Bereichen des Standes der Technik ist die Wiederverwendung von Aggregaten bekannt, der üblicherweise folgende Schritte vorausgehen:
- Rückführung und Sammlung von gebrauchten, ausrangierten Funktionsteilen
- gegebenenfalls Aussortierung von ungeeigneten Funktionsteilen (z.B. stark beschädigten)
- Identifizierung von Gerätetyp und Bauzustand
- Reinigung des Aggregates
- Demontage der Funktionsteile
- Reinigung und Inspektion der Funktionsteile
- Auswahl von wiederverwendbaren Funktionsteilen
- gegebenenfalls Klassierung nach festgelegten Kriterien (z.B. Verschleißgrenzen)
- gegebenenfalls Aufarbeitung von Funktionsteilen
- Gerätemontage mit wiederverwendeten (gegebenenfalls aufgearbeiteten) und - wo erforderlich - neuen Bauteilen
- Funktionsprüfung
- Kennzeichnung als aufgearbeitetes Produkt.

Kritisch hierbei ist der Schritt "Auswahl von wiederverwendbaren Funktionsteilen", die eine sichere Beurteilung in Bezug auf die erwartbare verbleibende Lebensdauer des Funktionsteiles erfordert.

Diese Beurteilung erfolgt nach verschiedenen Kriterien, wie Beschädigung, Verformung, Korrosion und Verschleiß, die visuell oder mit Hilfsmitteln (z.B. Vermessung, Röntgen, Rissdetektion) überprüft werden. Hierdurch lassen sich die Funktionsteile mit eindeutigen Schädigungen identifizieren und aussortieren.

Alternativ, falls möglich, können diese Funktionsteile einer Aufarbeitung, z.B. durch mechanische Nacharbeit, Oberflächenbehandlung oder dergleichen zugeführt und anschließend wiederverwendet werden.

Dagegen ist es nicht möglich, die verbleibende nutzbare Lebensdauer solcher Funktionsteile zu bestimmen oder einzuschätzen, die keine der oben genannten, nachweisbaren Merkmale zeigen.

Während bei geringwertigen Teilen aus Sicherheitserwägungen statt der Weiterverwendung ein Tausch gegen ein Neuteil naheliegend ist, stellt dies für Bauteile mit hohem Material- bzw. Fertigungsaufwand ein entscheidendes wirtschaftliches Problem dar.

Der Bremssattel einer Scheibenbremse beispielsweise hat einen so großen Anteil an den gesamten Herstellungskosten der Scheibenbremse, dass sein Ersatz durch ein Neuteil die Aufarbeitung der betreffenden Scheibenbremse insgesamt unwirtschaftlich machen würde.

Das beschriebene übliche Verfahren zur Auswahl von wiederverwendbaren Funktionsteilen basiert im Wesentlichen auf Erfahrungswerten. Gebrauchte Bauteile ohne offensichtliche Schadensmerkmale können dabei, ohne dass sichere Entscheidungskriterien für ihre verbleibende Lebensdauer existieren, wiederverwendet werden, woraus sich Risiken für Anwender und Hersteller ergeben. Insbesondere für sicherheitsrelevante Funktionsteile ist ein solches Vorgehen nicht akzeptabel.

Desgleichen löst die Anwendung einer modifizierten technischen Spezifikation für aufgearbeitete Aggregate, die im Vergleich zu einem neuen eine reduzierte Lebensdauer zulässt, die genannte Problematik nicht. Die Funktion eines gebrauchten Funktionsteils mit unbekannter verbleibender Lebensdauer kann auch für solche eingeschränkte Anforderungen nicht sichergestellt werden.

Auch die Resultate von produktionsbegleitenden Erprobungen mit einzelnen aufgearbeiteten Scheibenbremsen nach einer reduzierten Spezifikation lassen keine Rückschlüsse auf die Lebensdauerreserven anderer aufgearbeiteter Bremsen zu, da die Restlebensdauer für jede solcher Scheibenbremsen individuell ist und, abhängig vom Zustand der verwendeten Bauteile, stark unterschiedlich sein kann.

Für eine Abschätzung des Ausnutzungsgrades der Zeitfestigkeit beispielsweise eines Bremssattels werden in der Regel belastungsrelevante Werte erfasst und separat gespeichert. Allerdings ist dies nur mit einem erheblichen Kostenaufwand möglich und stellt im Übrigen eine fehleranfällige Lösung dar.

In der US 2007/107994 A1 ist eine Verschleißerkennung eines Bremsbelages offenbart, bei dem auf der Belagträgerplatte eine von einem Reibbelag überdeckt weitere, farblich dazu abgesetzte Schicht angeordnet ist.

Die DE 10 2011 000425 A1 thematisiert eine Bremsscheibe sowie ein Verfahren zur Überprüfung des Verschleißes einer Bremsscheibe.

Aus der EP 2 634 446 A1 ist ein Bremssattel bekannt, in den ein eine Materialermüdung anzeigender, als langgestreckter Träger ausgebildeter Indikator eingegossen ist, mit dem erkennbar ist, dass ein vorbestimmter Prozentsatz der Lebensdauer des Bremssattels oder eines anderes entsprechendes Bauteils, an dem ein solcher Indikator angebracht ist, erreicht ist.

Der Erfindung liegt die Aufgabe zugrunde, eine Scheibenbremse der gattungsgemäßen Art so weiterzuentwickeln, dass die Wiederverwendbarkeit nach Gebrauch, insbesondere hinsichtlich sicherheitsrelevanter Funktionsteile zuverlässig möglich wird.

Danach sind zumindest die sicherheitsrelevanten Funktionsteile jeweils mit einem Indikator ausgestattet, der sich in Belastungshinsicht durch eine betriebsbedingt geringere Lebensdauer auszeichnet als die sicherheitsrelevanten Bereiche des jeweiligen Funktionsteiles.

Dabei ist dieser Indikator so ausgebildet, dass eine erkennbare Schädigung dann eintritt, wenn die Restlebensdauer des Funktionsteiles nicht ausreicht, um eine Wiederverwendung mit der notwendigen Betriebssicherheit zu erlauben. Als sicherheitsrelevante Funktionsteile, die mit einem solchen Indikator versehen sind, seien beispielhaft der Bremssattel, ein Bremshebel oder eine Brücke erwähnt. Letztere wird im Bremsfall mittels des Bremshebels gegen einen Bremsbelag gedrückt, der wiederum an eine fahrzeugseitige Bremsscheibe angepresst wird.

Der Bremshebel ist mittels Wälzlagern, die sich an der Brücke oder am Bremssattel abstützen, verschwenkbar.

Erfindungsgemäß ist der Indikator bei Einsatz in einem den Bremshebel schwenkbar abstützenden Wälzlager als mit einer Kerbe versehener Wälzkörper ausgebildet ist, der mit den übrigen Wälzkörpern des Wälzlagers in einem Käfig gehalten ist.

Die genannten, den Bremshebel schwenkbar abstützenden Wälzlager, üblicherweise Nadellager, sind so ausgebildet, dass als Indikator eine Nadel mit mindestens einer Kerbe versehen ist oder in reduzierter Länge vorliegt.

Nach einem weiteren Gedanken der Erfindung kann der Indikator als Rippe oder Steg ausgebildet sein, wobei mehrere solcher Rippen an dem jeweiligen Funktionsteil vorgesehen sein können.

Der Bremshebel ebenso wie der Bremssattel und die Brücke werden üblicherweise als Gussteil hergestellt, so dass es sich hier anbietet, den Indikator mit anzuformen. Denkbar ist jedoch auch, eine Bearbeitung der Funktionsteile vorzunehmen zur Ausbildung des Indikators.

Die Dimensionierung des Indikators in dem Sinne, dass er bei Erreichen einer vorbestimmten Belastungsgrenze beschädigt, d.h. deformiert oder zerstört wird, erfolgt im Voraus anhand der vorliegenden Daten für das Funktionsteil, deren Lebensdauer unter Zugrundelegung diverser Belastungsparameter bereits vorgegeben ist.

Der Indikator, als Beispiel die genannte Rippe, kann durchaus auch in anderer Bauform vorliegen. Erwähnt seien hierzu ein Federelement, ein eingespannter Draht oder dergleichen oder ein Blech, das eingegossen oder formschlüssig angebunden ist.

Weiter können als Indikatoren DU-Lager dienen, mit eingebetteten Kontakten, die bei entsprechendem Verschleiß beispielsweise ein Potisignal unterbrechen.

Eine Aufweitung des Bremssattels, wie sie typischerweise auftritt, kann über einen eine Montageöffnung des Bremssattels überspannenden Belaghaltebügel abgegriffen und so ermittelt werden.

In jedem Fall ist gewährleistet, dass nur solche Funktionsteile und in der Folge nur eine solche Scheibenbremse wiederverwendet wird, die den sicherheitstechnischen Anforderungen entsprechen.

Weitere vorteilhafte Ausbildungen der Erfindung sind in den Unteransprüchen gekennzeichnet.

Ausführungsbeispiele der Erfindung werden nachfolgend anhand der beigefügten, jeweils schematisch dargestellten Beispiele beschrieben.

Es zeigen:
- Figur 1: einen Bremshebel als Einzelheit in einer perspektivischen Ansicht
- Figur 2: einen Ausschnitt des Bremshebels, gleichfalls perspektivisch dargestellt
- Figur 3: einen Ausschnitt eines Bremssattels einer Scheibenbremse in schaubildlicher Darstellung
- Figur 4: einen weiteren Ausschnitt des Bremssattels, ebenfalls in perspektivischer Ansicht.

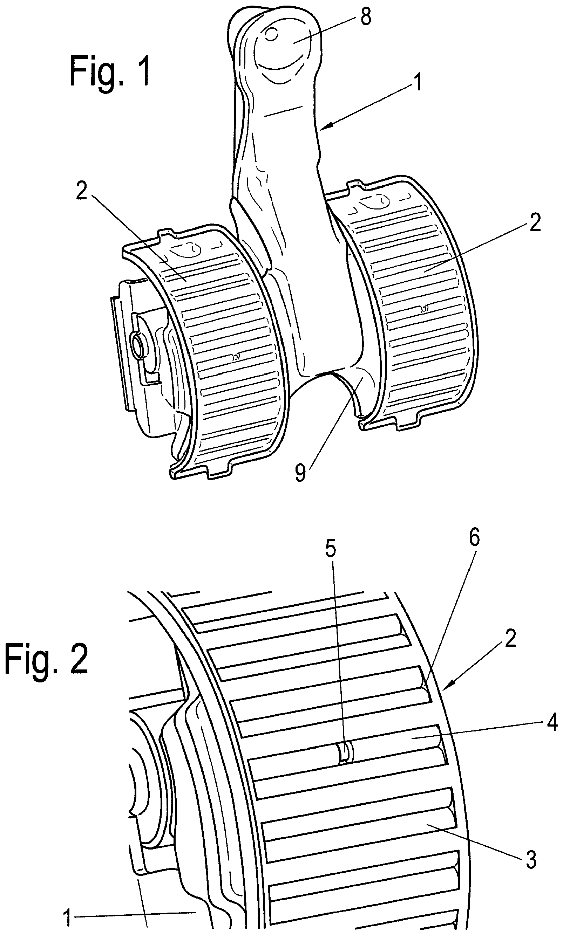

In der Figur 1 ist ein Bremshebel 1 einer pneumatisch oder elektromotorisch betätigbaren Scheibenbremse dargestellt, der als Exzenterhebel ausgebildet ist mit einer am freien Ende muldenförmigen Aufnahme 8, an die ein Stößel eines Bremszylinders in Funktion angreift.

Das gegenüberliegende Ende der Aufnahme 8 ist als Exzenter 9 ausgebildet, der sich einerseits an einer im Innern eines Bremssattels 7 der Scheibenbremse angeordneten verschiebbaren Brücke abstützt und andererseits über Wälzlager 2 am Bremssattel 7.

Im Beispiel bilden die Wälzlager 2 gattungsgemäße Funktionsteile, wobei sie als Nadellager ausgebildet sind mit Nadeln , die in einem Käfig 6 gehalten sind.

Gemäß der Erfindung ist das Funktionsteil, sprich das Wälzlager 2, mit mindestens einem Indikator 4 ausgestattet, dessen betriebsbedingte Lebensdauer geringer ist als die des Wälzlagers 2.

Hierzu weist der Indikator 4 in Form einer Nadel, vergleichbar denen die als Wälzkörper dienen, eine umlaufende Kerbe 5 auf, durch die bei Überschreiten einer vorbestimmten Belastungszeit eine Beschädigung des Indikators 4 eintritt, bis hin zum Bruch.

Wesentlich dabei ist, dass die betriebsbedingte Lebensdauer des Indikators 4 geringer ist als die der Wälzkörper, d.h. der Nadeln .

Die Ausbildung des Indikators 4 im Bereich des Wälzlagers 2 ist besonders deutlich in der Figur 2 dargestellt, die einen vergrößerten Ausschnitt der Figur 1 wiedergibt.

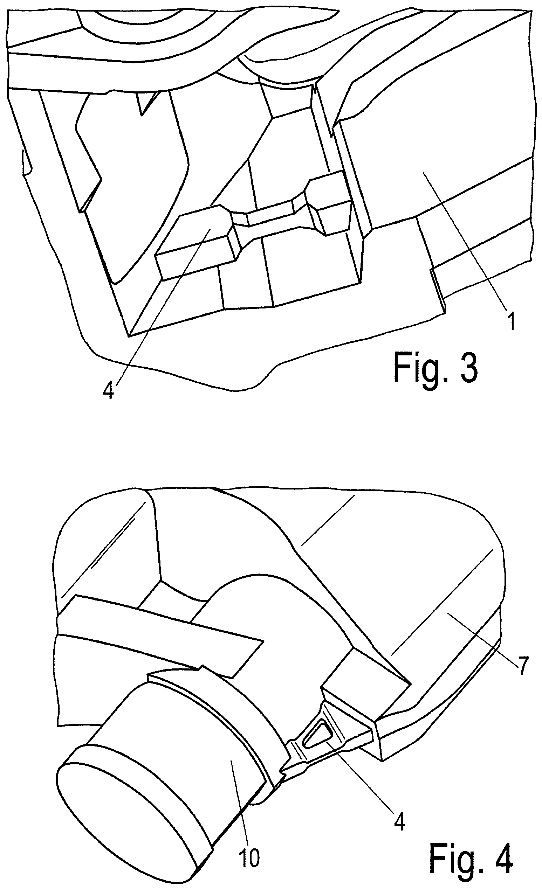

In der Figur 3 ist ein Ausschnitt eines Bremssattels 7 einer Scheibenbremse abgebildet mit einem knochenförmigen Indikator 4, d.h., mit zwei verdickten Enden , die durch einen diesem gegenüber im Querschnitt kleineren Steg miteinander verbunden werden.

Je nach Belastung des Bremssattels 7 erfolgt eine Deformation bzw. Zerstörung des Indikators 4, bevor der Bremssattel 7 unbrauchbar beschädigt ist.

Ein weiteres Beispiel eines Indikators 4 ist in der Figur 4 gezeigt, die einen Ausschnitt des Bremssattels 7 im Bereich eines Stutzens 10 eines Gleitlagers wiedergibt, in dem ein mit einem fahrzeugseitigen Bremsträger verbundener Führungsholm gelagert ist. Hierbei ist der Indikator 4 im Sinne einer Konsole gestaltet ist, mit drei, den Randbereich bildenden, eine dreieckige Kontur ergebenden Schenkeln, die einen freien Innenraum begrenzen.

Auch hier wird der Indikator 4, je nach aufgenommener Belastung, auch zeitlich, verformt oder zerstört, so dass nach einer Demontage des Bremssattels 7 erkennbar ist, ob eine Wiederverwendung möglich ist.

## Patentansprüche

1. Scheibenbremse, insbesondere für ein Nutzfahrzeug, mit Funktionsteilen, die nach Gebrauch und anschließender Überprüfung auf Betriebssicherheit wiederverwendbar sind, wobei zumindest die sicherheitsrelevanten Funktionsteile jeweils mit mindestens einem Indikator (4) ausgestattet sind, dessen betriebsbedingte Lebensdauer geringer ist als die sicherheitsrelevanter Bereiche des Funktionsteiles, **dadurch gekennzeichnet, dass** der Indikator (4) bei Einsatz in einem Wälzlager (2) eines Bremshebels (1) als mit einer Kerbe (5) versehener Wälzkörper ausgebildet ist, der mit den übrigen Wälzkörpern (3) des Wälzlagers (2) in einem Käfig (6) gehalten ist.

2. Scheibenbremse nach Anspruch 1, **dadurch gekennzeichnet, dass** der Indikator (4) aus am Bremssattel (7), dem Bremshebel (1) oder anderen Funktionsteilen als angeschlossene Rippe oder Steg ausgebildet ist.

3. Scheibenbremse nach einem der vorhergehenden Ansprüche, **dadurch gekennzeichnet, dass** der Indikator (4) bei Ausbildung des Funktionsteiles als Gussteil mit angegossen ist.

4. Scheibenbremse nach einem der vorhergehenden Ansprüche, **dadurch gekennzeichnet, dass** der Indikator (4) durch spanende Bearbeitung angebracht ist.

5. Scheibenbremse nach einem der vorhergehenden Ansprüche, **dadurch gekennzeichnet, dass** der am Bremshebel (1) angeordnete Indikator (4) als Konsole mit einer dreieckigen Kontur ausgebildet ist, mit einen freien Innenraum begrenzenden Schenkeln.

6. Scheibenbremse nach Anspruch 2, **dadurch gekennzeichnet, dass** der Indikator (4) des Bremssattels (7) knochenförmig ausgebildet ist, mit zwei verdickten Enden und einem diesen gegenüber im Querschnitt geringeren Steg.

7. Scheibenbremse nach einem der vorhergehenden Ansprüche, **dadurch gekennzeichnet, dass** der Indikator (4) aus einem Federelement oder eingespanntem Draht besteht.

8. Scheibenbremse nach einem der vorhergehenden Ansprüche, **dadurch gekennzeichnet, dass** der Indikator (4) aus einem eingegossenen oder formschlüssig angeschlossenen Blech gebildet ist.

9. Scheibenbremse nach einem der vorhergehenden Ansprüche, **dadurch gekennzeichnet, dass** der Indikator (4) aus einem mit einem Kontakt versehenen DU-Lager besteht.

10. Scheibenbremse nach einem der vorhergehenden Ansprüche, **dadurch gekennzeichnet, dass** die Funktionsteile durch den Bremshebel (1), die Brücke und den Sattel (7) gebildet sind.

## Claims

1. Disc brake, in particular for a utility vehicle, with functional components which after being used and subsequently tested for operational safety can be used again, wherein at least the safety-relevant functional components are in each case equipped with at least one indicator (4) whose operation-related lifetime is shorter than the safety-relevant range of the functional component, **characterised in that** when used in a roller bearing (2) of a brake lever (1) the indicator (4) is in the form of a roller body provided with a notch (5), which is held with the other roller bodies (3) of the roller bearing (2) in a cage (6).

2. Disc brake according to Claim 1, **characterised in that** the indicator (4) is in the form of an attached rib or web from the brake caliper (7), the brake lever (1) or other functional components.

3. Disc brake according to either of the preceding Claims, **characterised in that** if the functional component is in the form of a casting, the indicator (4) is cast integrally with it.

4. Disc brake according to any of the preceding claims, **characterised in that** the indicator (4) is attached by machining.

5. Disc brake according to any of the preceding claims, **characterised in that** if the indicator (4) is arranged on the brake lever (1), it is in the form of a bracket with a triangular contour, having limbs which delimit a free inside space.

6. Disc brake according to Claim 2, **characterised in that** if the indicator (4) is on the caliper (7), it is bone-shaped with two thickened ends and a web with a smaller cross-section compared with these.

7. Disc brake according to any of the preceding claims, **characterised in that** the indicator (4) consists of a spring element or a clamped wire.

8. Disc brake according to any of the preceding claims, **characterised in that** the indicator (4) is formed as a sheet-metal component which is cast in place or which is attached with positive interlock.

9. Disc brake according to any of the preceding claims, **characterised in that** the indicator (4) consists of a DU bearing provided with a contact.

10. Disc brake according to any of the preceding claims, **characterised in that** the functional components are in the form of the brake lever (1), the bridge and the caliper (7).

## Revendications

1. Frein à disque, notamment d'un véhicule utilitaire, ayant des pièces fonctionnelles, qui peuvent être réutilisées après utilisation et contrôle venant ensuite de la sécurité de fonctionnement, dans lequel au moins les pièces fonctionnelles pertinentes du point de vue de la sécurité sont équipées chacune d'au moins un indicateur (4), dont la durée de vie due au fonctionnement est plus petite que celle des parties pertinentes du point de vue de la sécurité de la pièce fonctionnelle, **caractérisé en ce que** l'indicateur (4), lors de l'utilisation dans un palier (2) à roulement d'un levier (1) de frein, est constitué sous la forme d'un corps de roulement pourvu d'une entaille (5), qui est maintenu dans une cage (6) avec les corps (3) de roulement habituels du palier (2) à roulement.

2. Frein à disque suivant la revendication 1, **caractérisé en ce que** l'indicateur (4) est constitué sous la forme d'une nervure ou dune entretoise raccordée à l'étrier (7) de frein, au levier (1) de frein ou à d'autres pièces fonctionnelles.

3. Frein à disque suivant l'une des revendications précédentes, **caractérisé en ce que** l'indicateur (4) est coulé sous la forme d'une pièce coulée, lors de la constitution de la pièce fonctionnelle.

4. Frein à disque suivant l'une des revendications précédentes, **caractérisé en ce que** l'indicateur (4) est obtenu par usinage avec enlèvement de copeaux.

5. Frein à disque suivant l'une des revendications précédentes, **caractérisé en ce que** l'indicateur (4), disposé sur le levier (1) de frein, est constitué sous la forme d'une console à contour triangulaire, ayant des branches délimitant un espace intérieur libre.

6. Frein à disque suivant la revendication 2, **caractérisé en ce que** l'indicateur (4) de l'étrier (7) de frein est constitué sous la forme d'un os, ayant deux extrémités épaissies et une entretoise de section transversale plus petite que celles-ci.

7. Frein à disque suivant l'une des revendications précédentes, **caractérisé en ce que** l'indicateur (4) est constitué d'un élément de ressort ou d'un fil métallique encastré.

8. Frein à disque suivant l'une des revendications précédentes, **caractérisé en ce que** l'indicateur (4) est constitué d'une tôle coulée ou raccordée à complémentarité de forme.

9. Frein à disque suivant l'une des revendications précédentes, **caractérisé en ce que** l'indicateur (4) est constitué d'un palier DU muni d'un contact.

10. Frein à disque suivant l'une des revendications précédentes, **caractérisé en ce que** les pièces fonctionnelles sont formées par le levier (1) de frein, le pontet et l'étrier (7).
